# EUROPEAN PATENT SPECIFICATION

(11) **EP 0 504 172 B1**
(45) Date of publication and mention of the grant of the patent: **28.09.1994**
(21) Application number: 90917439.3
(22) Date of filing: 05.12.1990
(51) Int. Cl.: B60D 1/34

(54) **TOWING DEVICE**
SCHLEPPVORRICHTUNG
DISPOSITIF DE REMORQUAGE

(30) Priority: 06.12.1989 GB 8927570
(43) Date of publication of application: 23.09.1992
(73) Proprietor: WINSTANLEY, James, Hindley Green Wigan WN2 4XF (GB)
(72) Inventor: WINSTANLEY, James, Hindley Green Wigan WN2 4XF (GB)
(74) Representative: Low, Peter John
(86) International application number: GB9001889
(87) International publication number: WO9108119

(56) References cited:
- EP-A- 373 566
- DE-A- 2 135 704
- DE-C- 672 646
- FR-A- 2 418 122
- GB-A- 1 202 595
- US-A- 3 331 618
- US-A- 3 947 839
- US-A- 4 208 065

## Description

This invention relates to towing devices particularly but not exclusively for trailers including caravans or the like.

Conventional towing devices comprise a ball and socket joint. The ball is rigidly connected to the underside of a car via bolts and the socket is rigidly connected to a trailer. The socket is placed over the ball to provide a joint which allows relative lateral movement of the car and trailer so as to aid manoeuvring of the car and trailer around corners. A pin passes through the wall of the socket and below the ball to prevent the socket from become detached from the ball.

The known joint is problematic in that when the car is towing the trailer along a straight road the trailer tends to move laterally relative to the car owing to the action of wind or uneven road surfaces on the trailer.

The present invention has been made from a consideration of this problem.

DE-A-2135704 shows a towing device according the preamble of claim 1 comprising a towing member connected to a vehicle and a towed member connected to a trailer in which means are provided for resisting angular movement of the towing member and the towed member. The means for resisting angular movement comprises a piston and cylinder arrangement.

For the purposes of the present invention the term vehicle is used to describe any vehicle such as a tractor, car, lorry articulated lorry and so forth which may be used for towing and the term trailer is used to describe any item which may be towed such as a trailer, caravan and so forth.

According to the present invention there is provided a towing device comprising a towing member adapted to be connected to a vehicle, a member to be towed adapted to be connected to the trailer, the towing device comprising means for resisting relative angular movement of the towing member and the towed member, characterised in that said means comprises two releasably engageable parts, at least one of the parts being urged towards the other part in a direction along the axis of the angular movement.

In a preferred embodiment of the invention means are provided for rigidly connecting the towing member to the towed member. At least a part of one of the members is movable so as to allow relative lateral movement of the vehicle and trailer when the towing device is in use. The towing member comprises means for rigidly connecting the towing member to the towed member, at least a part of the towing member being movable so as to allow relative lateral movement of the vehicle and trailer when the towing device is in use and the towing member further comprising means for resisting the said lateral movement.

Preferably the means for resisting the said lateral movement are provided on the said one member. The releasably engageable parts may be biased towards one another, and may comprise teeth which releasably engage the teeth of other such parts.

The means for rigidly connecting the towing member to the towed member may comprise a pin passing between the towed member and the towing member. For example a pin may pass through the wall of the socket and be received in a bore within the ball. Alternatively the rigid connection may be provided by providing at least one barrier integral with or adapted to be connected to one member which in use will restrict the lateral travel of the other member. For example a hole may be provided in one of the members through which at least a part of the other member will pass, the hole being of similar dimension to the part of the other member passing through it so as to provided a snug fit.

Alternatively a square ball and a correspondingly sized socket may be used.

A lid or pin may be provided over the ball and socket joint to restrict the upward travel of the socket from the ball and hence prevent the socket from becoming detached from the ball.

The towing device may comprise two releasably engageable parts such as two sets of opposing teeth at least one of the parts being urged towards the other part.

In order that the invention may be more readily understood specific embodiments thereof will now be described by way of example only with reference to the accompanying drawings in which:-
Figure 1 is a diagrammatic part sectional side elevation of one embodiment of the invention in use;
Figure 2 is a rear part sectional elevation of the towing member of Figure 1;
Figure 3 is a part sectional perspective view of the towing member of Figure 1;
Figure 4 is a rear elevation of a further embodiment of the towing member of the invention;
Figure 5 is a side elevation of the towing member of Figure 4;
Figure 6 is a side elevation of a further towing member;
Figure 7 is a side elevation of a still further towing device; and
Fig. 8 is a side elevation of another towing device.

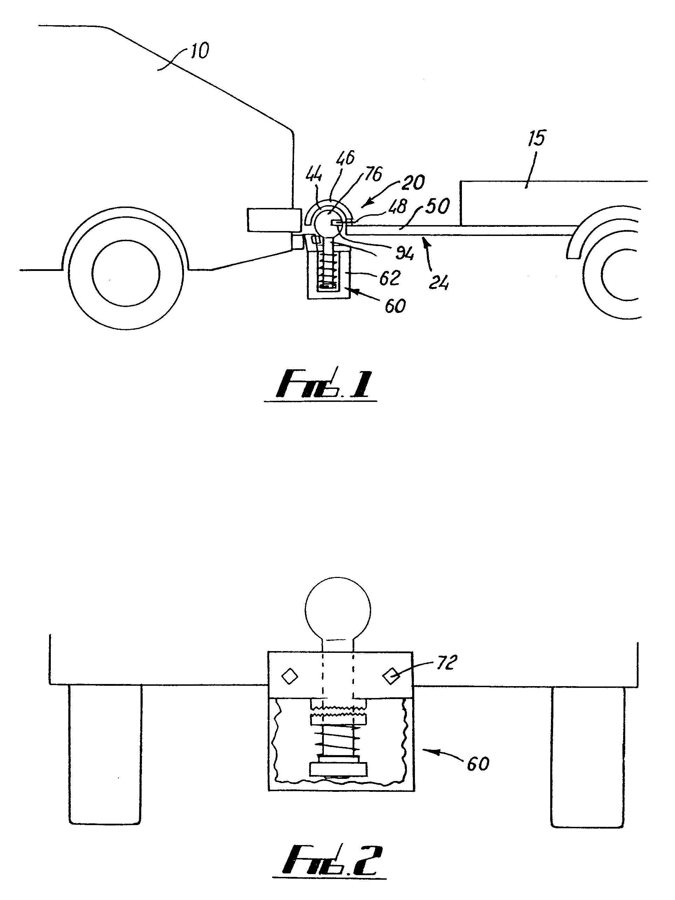

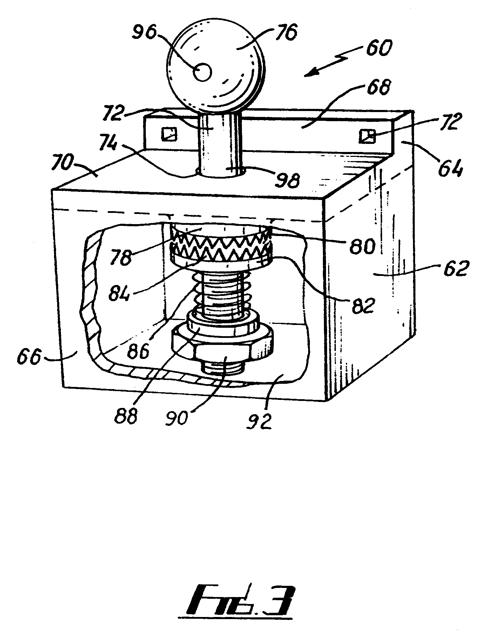

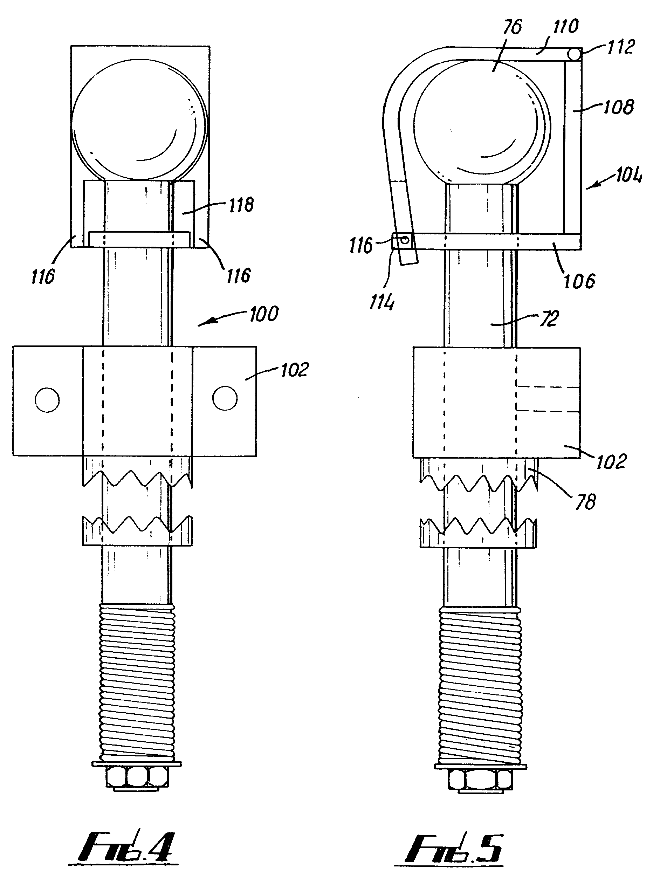

Referring to Figures 1 to 3 a vehicle 10 is connected to a trailer 15 via towing device 20. The towing device 20 comprises a towing member 60 and a towed member 24.

The towing member 60 comprises a box 62 the rear upstanding wall 64 of which is taller than the front upstanding wall 66 such that upstanding plate 68 extends above the top 70 of the box 62. Plate 68 is adapted to be secured to the rear of a vehicle 10 via bolts 72.

A toothed ring 78 is integral with the underside of the top 70 of the box 62. An orifice 74 passes through the top 70 and the centre of the toothed ring 78. A ball 76 is integral with the top of a rod 72. Rod 72 extends downwardly from ball 76 through orifice 74 and into box 62.

A second toothed ring 80 is non-rotatably mounted around the part of the rod 72 immediately below the first toothed ring whilst being vertically movable such that the sets of teeth 80,84 of the two rings 78,82 may releasably engage one another. This may be achieved by forming the rod 72 into a non circular shape such as a hexagon or elipse and providing a correspondingly sized orifice through the centre of the second toothed ring 82.

The second toothed ring 82 is biased towards the first toothed ring 78 via coil spring 86. The tension of the spring 86 is maintained via tightening nut 90 which bears against the spring 86 via washer 88.

The base 90 of rod 72 rests on the base of the box 92. Alternatively a collar may be provided around a part 98 of the rod which extends above the top 70 of the box so as to support the rod 72 whilst still allowing rotation thereof.

The towed member 24 comprises a socket 44 defined by a wall 46. The socket 44 is adapted to receive the ball 76 when the towing device 20 is in use. A pin 48 extends through wall 46 of towing device 24 and is received in bore 94 so as to provide a rigid connection between the towing and towed members 60,24 when the pin 48 is in position. This prevents relative lateral movement of the towing and towed member 60,24. The towed arm 30 extends rearwardly from the socket 44, to the underside of the trailer 15.

In order to detach the trailer 15 from vehicle 10 the pin 48 is removed from the bore 94 and the socket 44 is withdrawn from the ball 76.

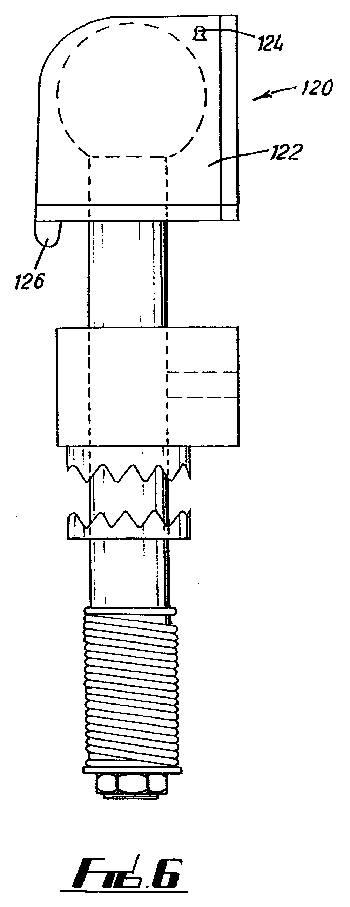

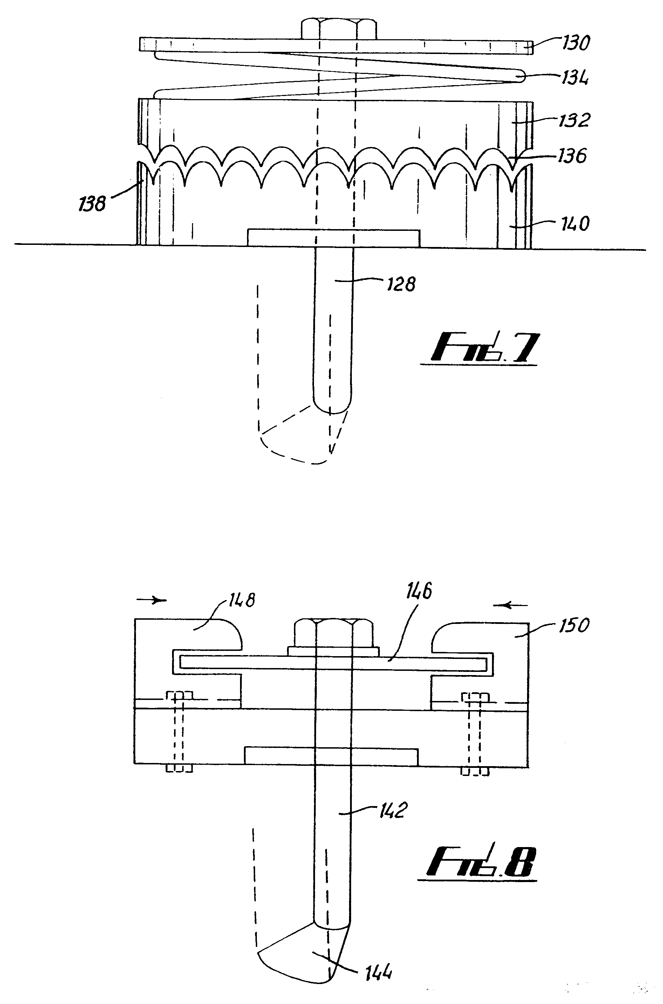

Referring to Figures 4 and 5 there is shown a further towing member 100. The towing member 100 is similar to that described with reference to Figures 1 to 3 except that the rod 72 is supported by a collar.

The upper toothed ring 78 is integral with the collar 102. The manner of operation of the towing member 100 is also much the same as that previously described with reference to Figures 1 to 3.

However, here the towing member 100 is not attached to the towed member 26 by a pin being inserted though a bore in the towing ball 76. A cage 104 is provided around the top of the rod 72. The cage 104 comprises a base 106 which is fixed to the rod 72 and an upstanding rear wall 108 which is located on the side of the rod which is adjacent the towing vehicle. The sides of the cage 104 may be closed or open as desired. The roof and front of the cage are defined by a lid 110. The lid 110 is preferably attached to the top of the rear wall 108 at pivot 112. The lowermost part of the lid 110 may be releasably secured to the free end 114 of the base 106 by two locks 116.

In order to connect the towed member 24 to the towing member 100 the lid 110 is raised and the wall 46 of the towed member 24 is located over the ball 76. The lid 110 is then closed and locked to the base 106 of the cage via the two locks 116. It can be seen that an aperture 118 is provided in the lid through which the arm of the towed member 24 extends when in use. The part of the arm of the towed member 24 over which the aperture extends in a snug fit inside aperture 118 so as to provide a rigid connection before the towed and towing members. The height of the wall 108 is selected such that it bears against the top of the wall 46 of the towing member when in use such that the ball 76 and socket 44 remain engaged.

Referring to Figure 6 a cage 120 may have side walls only one of which 122 is shown. Here a pin would be passed through keyholes 124 in the side walls. The pin extends over the top of the wall 46 of the towed member so as to prevent the socket 44 from disengaging the ball 76. The top of the cage is open here although it is possible to provide a lid. A fitting 126 for an adjusting bar is provided on the underside of the base of the cage 120.

Referring to Figure 7 there is shown a further embodiment of the invention having particular but not exclusive application to articulated vehicles.

Here a vertical rod 128 depends from a trailer. A pin which is key shaped in underplan view extends from the base of the rod 128. A radially extending disc 130 is fixed to the rod 128. This may be achieved in one example by forming the rod 128 into a non-circular shape such as a square hexagon or elipse and providing a correspondingly sized orifice through the centre of the disc 130.

A second disc 132 is secured to the rod 128 below the first disc 130. The second disc 132 is parallel with the first disc 130. The second disc 132 is mounted in such a manner that is is non-rotatable relative to the rod 128 but may move vertically relative to the rod 128. A coil spring 134 is provided between the two discs 128,130. A set of teeth 136 are provided on the underside of the second disc 132. These teeth 136 resiliently releasably engage a further set of teeth 138 provided on the top of a third disc 140 under the action of the spring 134, the third disc 140 being fixed to the top of the tractor unit.

In use while the vehicle travels along a straight road the two sets of teeth 136,138 engage one another thus preventing relative lateral movement of the tractor unit and trailer. As the vehicle turns a corner this causes the upper disc 132 to move upwardly and also rotates relative to the lower disc 140 about the axis of the rod 128.

Referring now to Figure 8 there is shown a further embodiment of the invention with particular but not exclusive application to articulated vehicles.

A rod 142 depends from the underside of the base of a trailer. A pin 144 which is key shaped in underplan view extends from the base of the rod. In use this is located in the so called fifth wheel of the trailer unit in a conventional manner. A disc 146 extends in a radial direction from the rod 142. This disc 146 is fixed to the rod 142 such that there is no relative movement of the dics 146 and the rod 142.

Brake shoes 148,150 operated by way of an hydraulic system move inwardly to engage the periphery of the disc 146 when desired, such as when the vehicle is traveling along a straight road. The system is operated either manually by the driver or automatically.

Alternatively the disc 146 may be maintained for any desired length of time in a set position by way of a disc brake system

It will be seen that the present invention allows relative lateral movement between the vehicle 10 and trailer 15 on cornering whilst resisting lateral movement while the vehicle 10 and trailer 15 are travelling along a straight road. This controlled resistance to lateral movement may be provided by the springs, releasably engageable teeth which are biased together or by other suitable means.

It is to be understood that the above described embodiments are by way of illustration only. Many modifications and variations are possible.

For example the towing device could be used on an articulated tractor and trailer.

## Claims

1. A towing device comprising a towing member (22) adapted to be rigidly connected to a vehicle, a member (24) to be towed adapted to be connected to the trailer, the towing device comprising means for resisting relative angular movement (38,40;78,84,86,132,134,140,146,148,150) of the towing member (60,700) and the towed member (24,26), characterised in that said means comprises two releasably engageable parts (78,82,132,140), at least one of the parts being urged towards the other part in a direction along the axis of the angular movement.

2. A towing device as claimed in claim 1, characterised in that means are provided for rigidly connecting the towing member (22) to the towed member (24) and at least one of the members (22,24) is movable so as to allow relative angular movement of the vehicle and trailer when in use.

3. A towing device as claimed in claim 1 or claim 2, characterised in that at least a part of the towing member (22) is movable so as to allow relative angular movement of the vehicle and trailer when the towing device is in use.

4. A towing device as claimed in any preceding claim, characterized in that the angular movement is resiliently resisted by at least one spring (38,40,86,134).

5. A towing device as claimed in any preceding claim, characterised in that the means for resisting the relative movement comprise sets of teeth, which are releasably engageable with one another.

6. A towing device as claimed in any preceding claim, characterised in that the means for providing a rigid connection between the towing member (22) and the towed member (24) comprises a pin (48) extending between the towing member (22) and the towed member (24).

7. A towing device as claimed in any preceding claim, characterised in that the means for providing a rigid connection comprises a barrier (100), the barrier being integral with or adapted to be connected to one of the towing member (22) or towed member (24) such that in use the barrier restricts the lateral travel of the other member (22,24).

8. A towing device as claimed in any preceding claim, characterised in that the towing device comprises a ball and socket, wherein the upward travel of a socket is restricted by way of a body (110) which may be secured over the socket (46) when connected to the ball (34).

9. A towing device as claimed in claim 8, characterised in that the upward travel of the socket is restricted by way of a lid which may be secured over the socket (46) when connected to the ball.

## Patentansprüche

1. Schleppvorrichtung mit einem schleppenden Glied (22). welches zur starren Verbindung mit einem Fahrzeug ausgebildet ist, mit einem abzuschleppenden Glied (24). welches zur Verbindung mit dem Anhänger ausgebildet ist, wobei die Schleppvorrichtung eine Einrichtung (38, 40; 78, 84, 86, 132, 134, 140, 146, 148, 150) umfaßt, welche sich einer relativen Winkelbewegung zwischen schleppendem Glied (60, 100) und geschlepptem Glied (24, 26) widersetzt, dadurch gekennzeichnet, daß diese Einrichtung zwei lösbar in Eingriff bringbare Teile (78, 82, 132, 140) umfaßt, wobei mindestens einer dieser Tolle auf das andere Teil zu in einer Richtung entlang der Achse der Winkelbewegung gedrückt wird.

2. Schleppvorrichtung nach Anspruch 1, dadurch gekennzeichnet, daß eine Einrichtung vorgesehen ist, welche das schleppende Glied (22) starr mit dem geschleppten Glied (24) verbindet und daß mindestens eines der Glieder (22, 24) derart beweglich ist, daßeine relative Winkelbewegung zwischen Fahrzeug und Anhänger möglich ist, wenn diese im Gebrauch sind.

3. Schleppvorrichtung nach Anspruch 1 oder 2, dadurch gekennzeichnet, daß mindestens ein Teil des schleppenden Gliedes (22) derart beweglich ist, daß eine relative Winkelbewegung zwischen dem Fahrzeug und dem Anhänger möglich ist, wenn die Schleppvorrichtung in Gebrauch ist.

4. Schleppvorrichtung nach einem der vorhergehenden Ansprüche, dadurch gekennzeichnet, daß der Winkelbewegung durch mindestens eine Feder (38, 40, 86, 134) elastisch Widerstand entgegengesetzt ist.

5. Schleppvorrichtung nach einem der vornergehenden Ansprüche, dadurch gekennzeichnet, daß die Einrichtung, welche sich dar relativen Bewegung widersetzt, Zahnsätze umfaßt, die lösbar in Eingriff miteinander gebracht werden können.

6. Schleppvorrichtung nach einem der vorhergehenden Ansprüche, dadurch gekennzeichnet, daß die Einrichtung, welche eine starre Verbindung zwischen dem schleppenden Glied (22) und dem geschleppten Glied (24) bildet, einen Stift (48) umfaßt, der zwischen dem schleppenden Glied (22) und dem geschleppten Glied (24) verläuft.

7. Schleppvorrichtung nach einem der vorhergehenden Ansprüche, dadurch gekennzeichnet, daß die Einrichtung, welche eine starre Verbindung bildet, eine Barriere (100) umfaßt, welche einstückig mit entweder dem schleppenden Glied (22) oder dem geschleppten Glied (24) bzw. mit diesem Glied verbindbar ist, derart, daß die Barriere sich im Gebrauch einer seitlichen Bewegung des jeweils anderen Gliedes (22, 24) widersetzt.

8. Schleppvorrichtung nach einem der vorhergehenden Ansprüche, dadurch gekennzeichnet, daß sie eine Kugel und eine Pfanne umfaßt, wobei die nach oben gerichtete Bewegung der Pfanne durch einen Körper (110) benchränkt ist, welcher über der Pfanne (46) befestigt werden kann, wenn diese mit der Kugel (34) verbunden ist.

9. Schleppvorrichtung nach Anspruch 8, dadurch gekennzeichnet, daß die nach oben gerichtete Bewegung der Pfanne durch eine Klappe beschränkt ist, die oberhalb der Pfanne (46) befestigt worden kann, wenn die Pfanne mit der Kugel verbunden ist.

## Revendications

1. Dispositif de remorquage comprenant un élément de remorquage (22) adapté à être rigidement connecté à un véhicule et un élément remorqué (24) adapté à être connecté à la remorque, le dispositif de remorquage comprenant des moyens (38, 40, 78, 84, 86, 132, 134, 140, 146, 148, 150) pour résister au mouvement angulaire relatif de l'élément de remorquage (60, 100) et de l'élément remorqué (24, 26), caractérisé par le fait que lesdits moyens comprennent deux parties pouvant s'engager et se libérer (78, 82, 132, 140), l'une au moins de ces parties étant rappelée vers l'autre en direction le long de l'axe du mouvement angulaire.

2. Dispositif de remorquage selon la revendication 1, dans lequel des moyens sont mis en oeuvre pour connecter rigidement l'élément de remorquage (22) à l'élément remorqué (24), et l'un au moins des éléments (22, 24) est mobile pour permettre un mouvement angulaire relatif entre le véhicule et la remorque pendant l'utilisation.

3. Dispositif de remorquage selon la revendication 1 ou 2, dans lequel au moins une partie de l'élément de remorquage (22) est mobile de manière à permettre un mouvement angulaire relatif entre le véhicule et la remorque lorsque le dispositif de remorquage est utilisé.

4. Dispositif de remorquage selon l'une des revendications précédentes, dans lequel le mouvement angulaire est contrarié élastiquement par au moins un ressort (38, 40, 86, 134).

5. Dispositif de remorquage selon l'une des revendications précédentes dans lequel les moyens contrariant le mouvement angulaire relatif comprennent des jeux de dents (80, 84, 136, 138) pouvant s'engager et se libérer l'un et l'autre.

6. Dispositif de remorquage selon l'une des revendications précédentes, dans lequel le moyen pour connecter rigidement l'élément de remorquage (22) avec l'élément remorqué (24) comprend une goupille (48) qui s'étend entre l'élément de remorquage (22) et l'élément remorqué (24).

7. Dispositif de remorquage selon l'une des revendications précédentes dans lequel le moyen de connexion rigide comprend une barrière (100), la barrière faisant partie intégrante ou étant adaptée à être connectée à l'un des éléments de remorquage (22) et remorqué (24), de manière telle que, pendant l'utilisation, la barrière réduit le déplacement latéral de l'autre élément (22, 24).

8. Dispositif de remorquage selon l'une des revendications précédentes, dans lequel le dispositif de remorquage comprend une rotule et une cuvette, le déplacement vers le haut de la cuvette étant limité par un corps (110) pouvant être fixé sur la cuvette (46) lorsque celle-ci est connectée à la rotule (76).

9. Dispositif de remorquage selon la revendication 8, dans lequel le déplacement vers le haut de la cuvette est limité par un couvercle pouvant être fixé sur la cuvette (46) lorsque celle-ci est connectée à la rotule (76).
